# EUROPEAN PATENT APPLICATION

(11) **EP 0 966 872 A1**
(43) Date of publication of application: **29.12.1999**
(21) Application number: 99304945.1
(22) Date of filing: 23.06.1999
(51) Int. Cl.: A01B 15/06

(54) **Plough point arrangement**

(30) Priority: 27.06.1998 GB 9813881
(71) Applicant: Landforce Limited, Lincolnshire NG31 6JE (GB)
(72) Inventor: Skinner, Paul, Grantham, Lincolnshire NG31 6JE (GB); Andrews, Mark Adrian, Grantham, Lincolnshire NG31 6JE (GB)
(74) Representative: Sherrard-Smith, Hugh

(57) **Abstract**

A plough point 12 includes an elongate flange 22 that is centrally located and that runs along its complete underside extent. The flange 22 fits snugly in a correspondingly shaped groove 24 located towards the end of a holder 10. The underside surfaces 26 either side of the flange 22 rest on corresponding faces 28 either side of the groove 24. The left hand side 30 of the point abuts with an elongate ledge 36 of the holder and the right hand side 34 of the point is generally flush with the end wall of the holder.

The leading edge 48 is at an angle to the elongate extent of the flange 22 such that the right hand part of the edge is in advance of the left hand part. Wear on the point occurs by wearing away the leading edge as consequently most severe in the leading part of the leading edge. Consequently a small portion of the leading edge coincident with the right hand underside surface will be relatively quickly worn away before the flange 22 then becomes the leading portion. Wear will then be relatively slow.

## Description

The present invention relates to a plough arrangement comprising a plough point and a plough holder.

In known ploughs a point is bolted on to a holder with a part of the point projecting from the holder. The point comprises a generally flat plate in which the projecting portion is chamfered. That projecting portion is pulled through the ground such that the soil moves over the generally planar and smooth upper surface of the point and then over the surface of the holder.

One disadvantage of such ploughs is that the point is prone to wear, particularly at the projecting leading edge. That leading edge is chamfered and therefore of reduced thickness. Accordingly the very part that is subject to most wear is thin and thus is most susceptible to wear. Accordingly frequent replacement of the points are required. This is expensive in terms of the cost of the points and also in terms of the time that the plough is out of action and in the time required to effect the replacement.

A further disadvantage is that the projecting part of the point is subject to significant forces transverse to the general plane of the point. The point is thin and in addition is chamfered. Accordingly the point can flex and break as a result of those forces.

An example of such a prior holder and point is shown in UK Patent number 2 183 434B (Dowdeswell Engineering). It can be seen that the chamfered end of the point is extremely thin and thus it suffers from the above described disadvantages.

It is an object of the present invention to attempt to overcome at least some of the above described disadvantages.

According to one aspect of the present invention a plough point is arranged, in use, to be detachably mounted on a plough point holder such that a portion of the point projects from the holder, the point having, at its leading edge that is arranged to project from the holder, at least one first portion projecting from the underside of the point.

With such a point, the resistance to wear of the point can be increased by virtue of the depth of the first portion without impairing the performance of the top side of the point. Furthermore, the resistance to bending of the point can be increased as a result of the increased depth of the first portion.

The point may include at least one second portion on the underside of the point in the region of the leading edge, the or each second portion being of decreased depth when compared to the or each first portion.

The first portion may be located at one side region or at both side regions of the leading edge. Alternatively the first portion may be located between the side regions of the leading edge.

The or each first portion or, alternatively or additionally, the or each second portion may extend towards or to the part of the point holder that the point is arranged, in use, to be mounted on.

The leading edge may be arranged to be of equal distance from the general plane of a holder along the complete extent of the upper part of the leading edge.

The leading edge may present an upper surface that is of even distance from the general plane of a holder across the complete extent of the leading edge and adjacent to that leading edge. The upper surface of the point may extend upwardly and rearwardly from the leading edge and may so extend at the same angle of inclination from each part of the leading edge.

The or each first portion or, alternatively or additionally the or each second portion may extend to be coincident with the holder and may extend along substantially the complete extent of the holder.

The or each first portion may be arranged to be accommodated in a recess of a holder. The or each first portion, when attached to a holder, may cooperate with the holder to resist relative translational movement of the point to the holder in at least one, and preferably two relative directions. The first portion may be arranged to cooperate with the holder to resist relative rotational movement of the point and a holder about a general planar extent of the point.

The or each first portion may be arranged to cooperate with a holder to permit relative translational movement of the point and holder in order to advance the point along the holder.

The edge of part of the point may be arranged to cooperate with a holder to resist relative translational movement in at least one relative direction. The edge of the point may be arranged to cooperate with a holder to resist relative rotational movement of the point and the holder.

The point may be arranged to be connected at at least two relative positions on a holder whereby the leading edge of the point can be advanced.

The point may be provided with two ends, either of which can project from a holder to effect the ploughing. Both ends may have the same features as referred to above.

The present invention also includes a point when mounted on a point holder.

The present invention includes any combination of the herein referred to features or limitations.

The present invention can be carried into practice in various ways but one embodiment will now be described, by way of example, and with reference to the accompanying drawings, in which:
Figure 1 is a plan view of a point holder on share assembly 10 of a plough;
Figure 2 is a front view of Figure 1;
Figure 3 is a plan view of a leading part or point 12 designed to cooperate with the holder 10;
Figure 4 is a front view of Figure 4;
Figures 5, 6, 7, 8 and 9 are respectively a perspective view, a plan view, a front view, a side view and an underneath view of a further embodiment of a point 14;
Figures 10, 11, 12 and 13 are, respectively plan, front, side and underneath views of a further embodiment of a point 16;
Figures 14 and 15 are plan and front views of a further embodiment of a point holder 18, and
Figures 16 and 17 are a plan and a front view of a point 20 designed to cooperate with the holder 18.

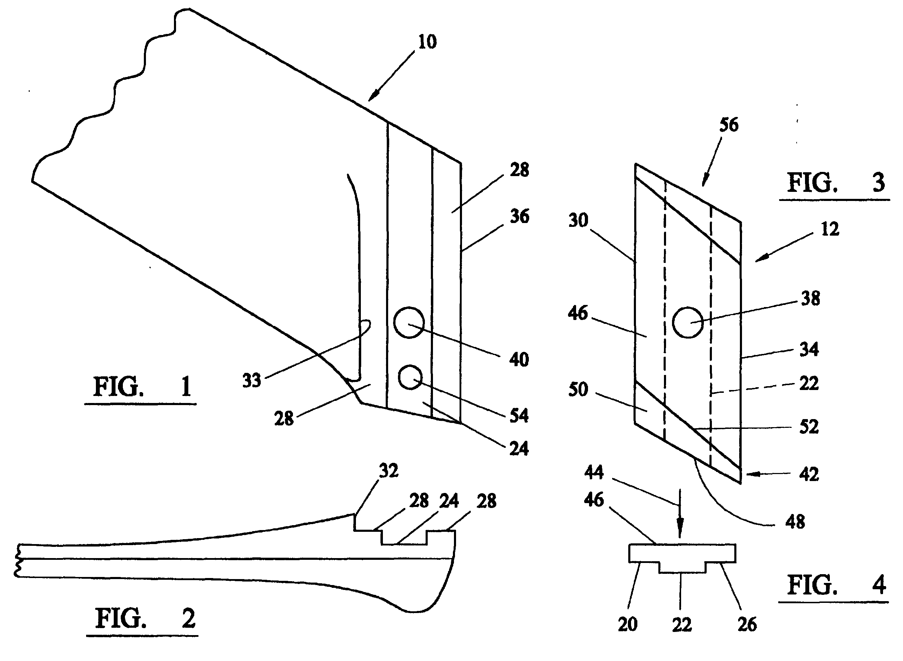

As shown in Figures 1 to 4, the point 12 includes an elongate flange 22 generally centrally located running along its complete underside extent. This flange 22 is arranged to sit snugly in a correspondingly shaped groove 24 located towards the end of the holder 10. The underside surfaces 26 either side of the flange 22 rest on corresponding faces 28 either side of the groove 24. The left hand side 30 of the point abuts with an elongate ledge 36 of the holder and the right hand side 34 of the point is generally flush with the end wall 36 of the holder.

The cooperation of the flange 22 and the groove 24 or the abutment of the wall 30 with the ledge 32 or both serves to prevent any relative twisting movement or lateral movement of the point at an angle to the elongate extent of the groove 24.

In use, the point is retained in position on the holder by passing the threaded end of a bolt through a hole 38 in the point and then through a hole 40 in the holder. A nut is then fastened to the end of the bolt that projects beyond the rear face of the holder to clamp the point firmly in position. The head of the bolt may rest in a recess in the point such that the head is flush with the surface of the point.

With the point clamped to the holder one end 42 of the point projects beyond the holder with ploughing taking place by advancing the point in the direction of arrow 44. The ploughed soil passes up over the top face 46 of the point and over the top surface of the holder 10.

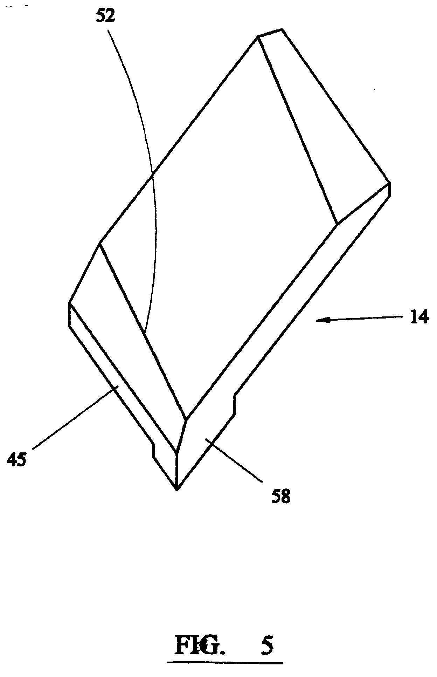

The point includes a leading edge 48 that forges forward through the soil. The top surface 50 of the point, rearwards from that leading edge is of reduced height compared to the height of the majority of the top surface 46. The surface 50 is inclined upwardly and rearwardly from the leading edge 48 to the top surface until those surfaces are of equal height at the line 52. The line 52 commences near the forward point of the leading edge and extends from one side to the other whilst diverging from the leading edge. This is clearly illustrated in Figure 5.

The leading edge 48 is at an angle to the elongate extent of the flange 22 such that the right hand part of that edge is in advance of the left hand part. Wear on the point occurs by wearing away the leading edge and is at its most severe in the leading part of the leading edge. Consequently a small portion of leading edge coincident with the right hand underside 26 surface will be relatively quickly worn away before the flange 22 then becomes the leading portion. When that occurs wear will be relatively slow. Thus the life of the point will be increased with the upper surface still presenting the required smooth continuous surface across its extent.

A further advantage of the flange 22 is that it imparts stiffness to the point. In this respect the point projects beyond the holder where it has no backing portion of the holder to provide support. Accordingly the flange 22 will resist any forces that tend to urge the projecting point up or down relative to the major part of the point that is coincident with the holder. That stiffness is able to be provided without the upper flat surfaces of the share being altered. Accordingly the draught forces through the soil remain unaltered by the addition of the flange. Furthermore, stiffness is provided to the point when the point is new and when the point is worn, with the stiffness always extending to the leading edge of the point.

After significant wear has occurred the point can be detached from the holder, the point can be slid along the holder with that movement being guided by the cooperating parts of the point and holder before the nut is passed through the same hole 38 in the point and a new hole 54 in the holder with the nut being fastened again to the bolt.

The same portions of the point and holder cooperate to prevent the relative translational and pivotal movement occurring albeit that those portions act at different elongate extents.

When even more wear has occurred, the bolt can be removed and the point can be turned around to present the other end 56 as the leading end. The bolt is then passed through the holes 38 and 40 and the ploughing can continue. The end 56 is a mirror image of the end 42 and thus the same comments in relation to the end 42 apply for the end 52.

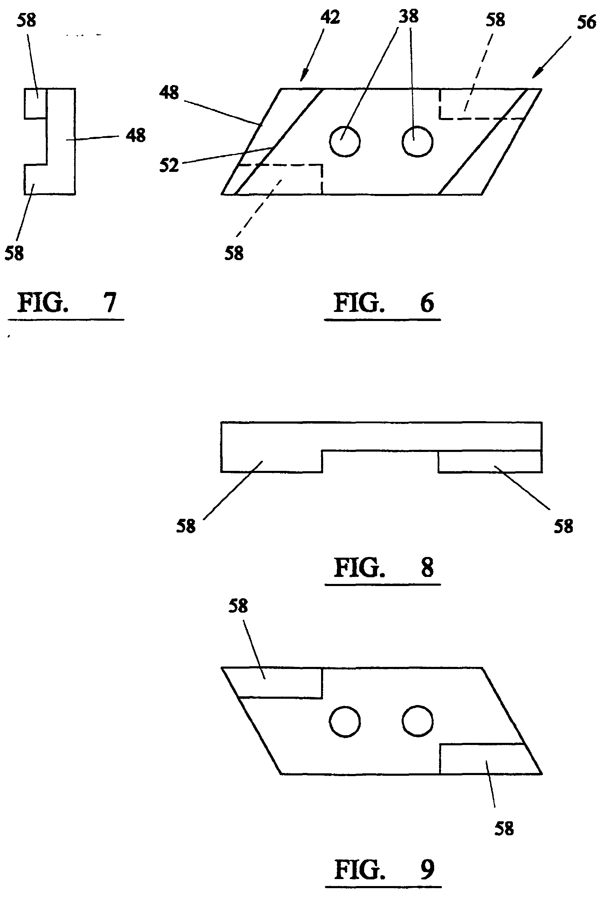

The point 14 shown in Figures 6 to 9 functions in a similar manner to the point 12. In this embodiment through the leading edge 48 includes, on its lower side, a flange 58 extending from the front part of leading edge, along the leading edge and rearwardly to the region where the perpendicular to the side from the rearmost point of the line 52 would meet the flange 58.

Again the flange 58 imparts stiffness to the point and decreases wear of the point as discussed above. In addition though the flange acts at the front portion of the leading edge where wear is most likely to occur both when the point is new and after wear has occurred.

In this embodiment two fastening holes 38 are provided. Bolts are passed through the holes to attach the point to a holder. The holder can have an additional hole that can allow the point to be moved forward on the holder after partial wear of the point. The opposite end 56 of the point is a mirror image of the end 42 and so again the point can be reversed to present the end 56 as the leading end.

In this embodiment the holder will be provided with a recess in which the flange 58 that is not at the front of the point can reside. If the point is to be moved forwards after partial wear then the recess can be longer than the flange to accommodate that sliding movement of the rearward flange.

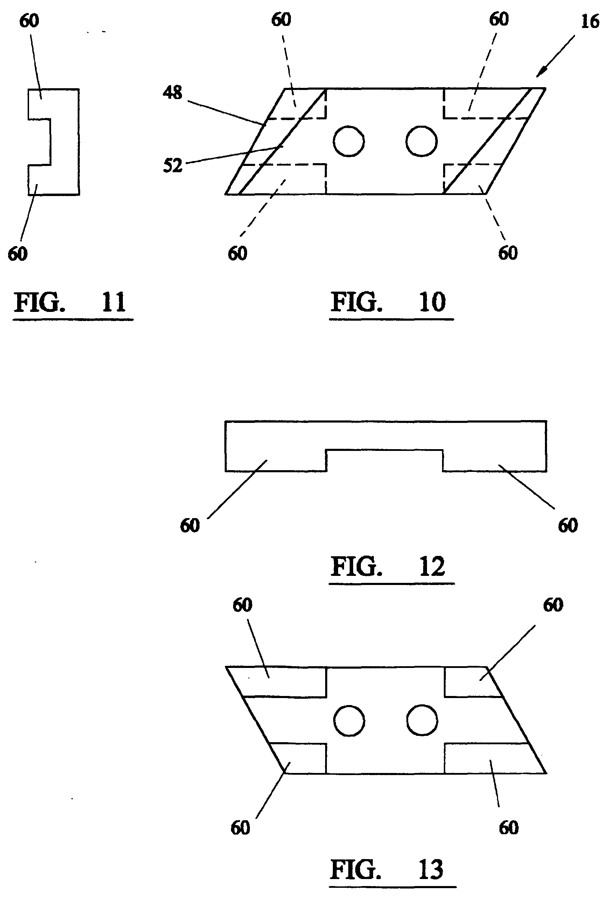

Figures 10 to 13 describe a point that is similar to that described in Figures 6 to 9. In this embodiment though two flanges 60 are provided at opposed sides of the leading edge. Both flanges extend rearwardly from the leading edge to the rear of the line 52. Consequently the flange 60 that extends from the front portion of the leading edge is of greater length than the other flange. This configuration provides, in addition the previously described advantages, an extremely rigid point.

The point can be advanced after partial wear and reversed as previously described. The holder can have recesses to accommodate the flanges 60 at the rear of the point and provision may be made to allow advancement of the flanges in those recesses.

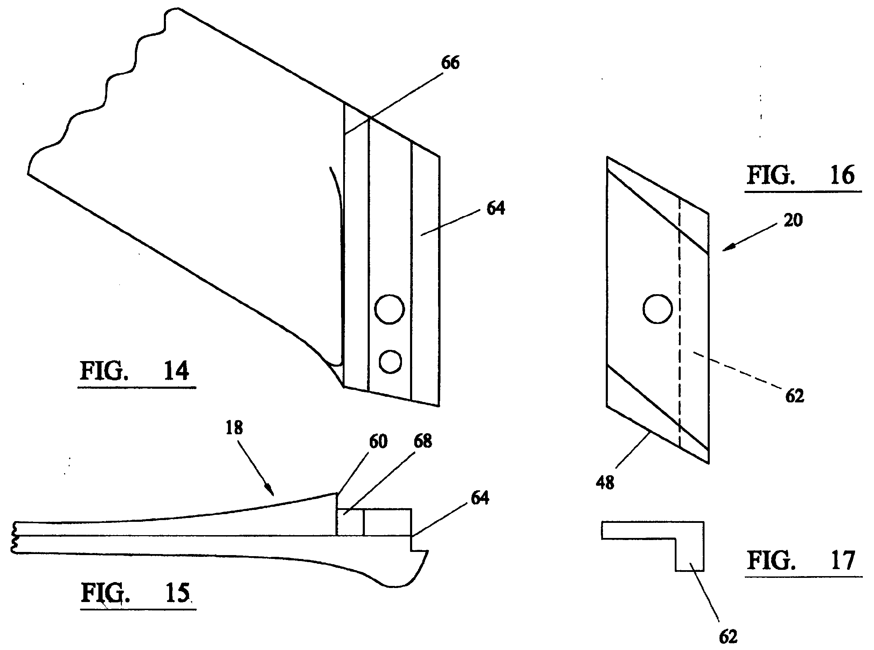

Figures 14 to 17 describe a holder 18 and a point 20 that are similar in function to the parts shown in Figures 1 to 4. In this embodiment though the flange 62 on the underside of the point extends along the complete length of the point from one leading edge 48 to the other. This flange imparts stiffness to the point and decreases wear of the front part of the leading edge 48 shown and will also have a lesser effect on wear when the point is reversed. Alternatively, flanges 62 could extend downwardly from both sides of the point along the complete extent of those sides.

Again a single mounting is shown and again the point can be advanced and rotated.

When the point is mounted in the holder in the relative positions shown, the flange rests in a recess 64 at the edge of the holder and the other edge of the point abuts against a wall 66 of the holder. The abutment of the point with the recess 64 or the wall 66 or both assists in preventing rotation of the point about the holder or movement of the point to the left when viewing the figure.

When the point is reversed, the flange 62 rests in a groove 68 located at the base of the wall 66 of the holder. In this position abutment of the flange with the recess resists relative rotational movement of the point and holder and relative translational movement other than in the direction of advancement of the point. Where two flanges 62 are provided one will be in the groove 68 and the other in the recess 64.

The present invention includes any combination of the herein referred to features or limitations.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A plough point arranged, in use, to be detachably mounted on a plough point holder such that a portion of the point projects from the holder characterised in that the point has, at its leading edge that is arranged to project from the holder, at least one first portion projecting from the underside of the point.

2. A plough point as claimed in Claim 1, wherein the point includes at least one second portion on the underside of the point in the region of the leading edge, the or each second portion being of decreased depth when compared to the or each first portion.

3. A plough point as claimed in Claim 1 or 2, wherein the first portion is located at one side region or at both side regions of the leading edge.

4. A plough point as claimed in Claim 2 or 3, wherein the or each first portion extends towards the part of the point holder that the point is arranged, in use, to be mounted on.

5. A plough point as claimed in any preceding claim, wherein the leading edge presents an upper surface that is of even distance from the general plane of a holder across the complete extent of the leading edge and adjacent to that leading edge.

6. A plough point as claimed in any preceding claim, wherein the or each first portion extends to be coincident with the holder.

7. A plough point as claimed in any preceding claim, wherein the first portion is arranged to cooperate with the holder to resist relative rotational movement of the point and a holder about a general planar extent of the point.

8. A plough point as claimed in any preceding claim, wherein the or each first portion is arranged to cooperate with a holder to permit relative translational movement of the point and holder in order to advance the point along the holder.

9. A plough point as claimed in any preceding claim, wherein the point is arranged to be connected at at least two relative positions on a holder whereby the leading edge of the point can be advanced.

10. A plough point as claimed in any preceding claim, wherein the point is provided with two ends, either of which can project from a holder to effect the ploughing.
